# EUROPÄISCHE PATENTSCHRIFT

(11) **EP 1 114 483 B1**
(45) Veröffentlichungstag und Bekanntmachung des Hinweises auf die Patenterteilung: **28.02.2007**
(21) Anmeldenummer: 99931235.8
(22) Anmeldetag: 01.07.1999
(51) Int. Cl.: H01M 8/02, H01M 8/10

(54) **PME-BRENNSTOFFZELLE MIT VERBESSERTER LANGZEITPERFORMANCE, VERFAHREN ZUM BETRIEB EINER PME-BRENNSTOFFZELLE UND PME-BRENNSTOFFZELLENBATTERIE**
FUEL CELL WITH IMPROVED LONG-TERM PERFORMANCE, METHOD FOR OPERATING A PME FUEL CELL AND PME FUEL CELL BATTERY
PILE A COMBUSTIBLE A MEMBRANE ELECTROLYTIQUE POLYMERE A PERFORMANCE AMELIOREE SUR LA DUREE, PROCEDE DE FONCTIONNEMENT D'UNE PILE DE CE TYPE ET BATTERIE DE PILES A COMBUSTIBLE A MEMBRANE ELECTROLYTIQUE POLYMERE

(30) Priorität: 10.08.1998 DE 19836142; 26.08.1998 DE 29815330 U
(43) Veröffentlichungstag der Anmeldung: 11.07.2001
(73) Patentinhaber: Pemeas GmbH, 65926 Frankfurt am Main (DE)
(72) Erfinder: GEBHARDT, Ulrich, D-91094 Langensendelbach (DE); WAIDHAS, Manfred, D-90427 Nürnberg (DE); DECKERS, Gregor, D-65929 Frankfurt (DE); BOENSEL, Harald, D-65529 Waldems (DE)
(74) Vertreter: Dörr, Klaus
(86) Internationale Anmeldenummer: PCT/EP1999/004570
(87) Internationale Veröffentlichungsnummer: WO 2000/010215

(56) Entgegenhaltungen:
- EP-A- 0 499 593
- EP-A- 0 589 850
- EP-A- 0 869 568
- EP-A- 0 918 362
- WO-A-96/24958
- WO-A-98/33225
- US-A- 5 912 088
- PATENT ABSTRACTS OF JAPAN vol. 017, no. 450 (E-1416), 18. August 1993 (1993-08-18) -& JP 05 101837 A (MITSUBISHI HEAVY IND LTD), 23. April 1993 (1993-04-23)
- PATENT ABSTRACTS OF JAPAN vol. 1997, no. 11, 28. November 1997 (1997-11-28) -& JP 09 199145 A (TOYOTA MOTOR CORP), 31. Juli 1997 (1997-07-31)
- PATENT ABSTRACTS OF JAPAN vol. 1998, no. 11, 30. September 1998 (1998-09-30) & JP 10 172587 A (TOSHIBA CORP), 26. Juni 1998 (1998-06-26)
- PATENT ABSTRACTS OF JAPAN vol. 016, no. 162 (E-1192), 20. April 1992 (1992-04-20) & JP 04 012465 A (FUJI ELECTRIC CO LTD), 17. Januar 1992 (1992-01-17)
- PATENT ABSTRACTS OF JAPAN vol. 018, no. 617 (E-1634), 24. November 1994 (1994-11-24) -& JP 06 236765 A (MASAHIRO WATANABE), 23. August 1994 (1994-08-23) -& DATABASE WPI Derwent Publications Ltd., London, GB; AN 1995-039872 XP002126549

## Beschreibung

Die Erfindung betrifft eine Polymer-Elektrolyt-Membran-(PEM)Brennstoffzelle mit neuartiger Konstruktion des Randbereichs, sowie ein Verfahren zum Betrieb einer Brennstoffzelle und eine Brennstoffzellenbatterie

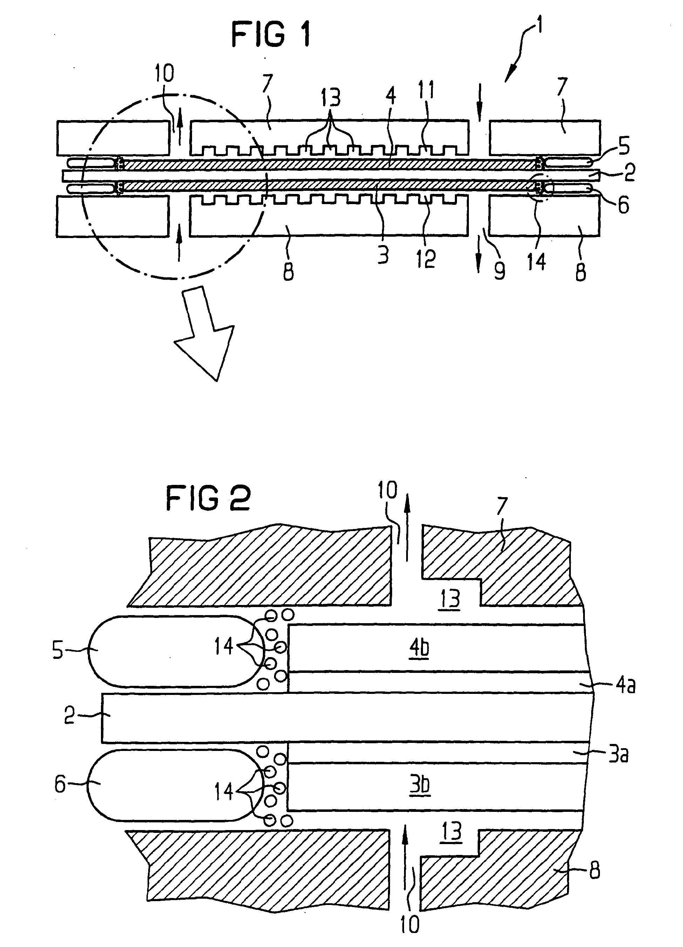

Aus der DE-PS 44 42 285 ist eine Konstruktion eines Randbereichs einer PEM-Brennstoffzelle bekannt(siehe dort Fig.2), bei der die Randabdichtung durch ein Rahmenelement erfolgt, das auf die Membran oben und unten das jeweils angrenzende Kollektorblech so andrückt, daß die drei Teile mechanisch fest, gasdicht und elektronisch isolierend miteinander verbunden sind. Die beiden Elektroden, mit denen die Membran auf jeder Seite beschichtet ist, erstrecken sich nicht bis in diesen Randbereich. An der Grenze zwischen Elektrodenbeschichtung der Membran und Randabdichtung entsteht somit ein winziger Spalt, an dem die Membran direkt, d.h. ohne schützende Elektrodenschicht, den Prozeßgasen ausgesetzt ist. Dies führt dort zu einer Austrocknung und Versprödung der Membran. Auch können Vorschäden, die z.B. beim Heißpressen der Membran-Elektroden-Einheit entstehen können, an dieser Stelle, wo die Membran direkt den Prozeßgasen ausgesetzt ist, zu Gasdurchbrüchen führen. Die Einsatzzeit oder Langzeitperformance einer Membran ist entsprechend durch diesen Spalt, an dem die Membran direkt den Prozeßgasen ausgesetzt ist, beschränkt.

Aufgabe der vorliegenden Erfindung ist es, eine PEM-Brennstoffzellenkonstruktion mit verbesserter Langzeitperformance zu schaffen.

Diese Aufgabe wird durch eine PEM-Brennstoffzelle nach Anspruch 1, durch das Verfahren zu ihrer Herstellung nach Anspruch 3 und durch die Bereitstellung der Brennstoffzellenbatterie nach Anspruch 4 gelöst. Weitere Ausgestaltungen der Erfindung gehen aus der Beschreibung, den Figuren und den Erläuterungen dazu hervor.

Gegenstand der Erfindung ist eine PEM-Brennstoffzelle, die zumindest zwei Polplatten umfaßt, die eine Membran einklemmen, die beidseitig von einer Elektrodenschicht bis auf den äußersten Rand bedeckt ist, wobei die Bedeckung der Membran mit zumindest einer Elektrodenschicht in den konstruktiven Randbereich der Brennstoffzelle hineinragt. Durch diese Vergrößerung zumindest einer Elektrodenschicht wird nicht nur erreicht, daß die Membran, zumindest auf der einen Seite, nicht mehr unmittelbar dem Prozeßgas ausgesetzt ist, sondern es bildet sich sogar ein kleines Wasserreservoir an der Grenze zwischen elektrodenbeschichteter und freier Membran im Randbereich, das die Membran kontinuierlich befeuchtet.

Ebenso ist Gegenstand der Erfindung ein Verfahren zum Betrieb einer PEM-Brennstoffzelle, bei dem die Bildung von Produktwasser im konstruktiven Randbereich der Brennstoffzelle zum Befeuchten der Membran ausgenutzt wird.

Schließlich ist Gegenstand der Erfindung eine PEM-Brennstoffzellenbatterie, zumindest zwei PEM-Brennstoffzellen nach einem der Ansprüche 1 bis 3 umfassend.

Als Polplatte wird hier jede Art von Separatoren und Kühl- und Kontaktblech bezeichnet, die den Gasraum einer Brennstoffzelle auf der, der Membran gegenüberliegenden Seite umschließen.

Als "konstruktiver Randbereich" der Brennstoffzelle wird der Bereich der Zelle bezeichnet, der außerhalb der aktiven Zellflächen liegt, in dem also kein regelmäßiger Ab- und Antransport von von Porzeßgasen und Umsetzungsprodukten stattfindet.

Die Elektrodenschicht ist eine gaspermeable Schicht und umfaßt bevorzugt eine aktive Katalysatorschicht und einen Träger, wie z.B. ein Kohlepapier.

Die Membran ist bevorzugt eine protonenleitende Elektrolytfolie, die im Betriebszustand einen Wassergehalt von ca. 20-40 Gew% hat.

Bevorzugt sind im Randbereich Dichtungen zwischen den Polplatten und der Membran angeordnet.

Nach einer Ausgestaltung der Erfindung ist das Rahmenelement aus Metall und im Randbereich zusätzlich eine elektrisch isolierende Schicht vorhanden, die bei der Stapelung der Einzelzellen eine Serienschaltung ermöglicht, ohne daß die Gefahr eines Kurzschlusses besteht.

Im folgenden wird eine Ausgestaltung der Erfindung anhand von zwei Figuren erläutert:
Die Figur 1 zeigt den Aufbau einer Brennstoffzelle im Querschnitt und
Figur 2 zeigt eine Detailvergrößerung des Randbereichs.

In Figur 1 ist eine Brennstoffzelle 1 zu sehen. In der Mitte befindet sich die Membran 2, die sich über die ganze Länge der Zelle erstreckt. Bis zum Rand hin ist die Membran beidseitig mit den Elektroden 3 und 4 beschichtet. Am Rand sieht man die Dichtungen 5 und 6, die an die beiden Seiten der Membran dort anschließen, wo die Elektroden aufhören. Zu erkennen sind oben und unten die Polplatten 7 und 8, die die beiden Reaktionsräume 11 und 12 der Brennstoffzelle 1 auf der, der Membran 2 gegenüberliegenden Seite begrenzen.

Der in Figur 1 gewählte Querschnitt durch die Brennstoffzelle 1 ist durch die Ver- oder Entsorgungskanäle 9/10 für die Prozeßgase gelegt. In den Polplatten 7 und 8 sind deshalb jeweils zwei Ent- oder Versorgungsöffnungen zu sehen, durch die die Prozeßgase, z.B. in Pfeilrichtung, strömen. Die Zellfläche zwischen den Ent- und Versorgungskanälen ist die aktive Zellfläche. Jenseits der Kanäle ist der Randbereich der Brennstoffzelle.

Im Betrieb strömt ein Prozeßgas, z.B. der Brennstoff durch die Verteilungskanäle 13 in einen der beiden Reaktionsräume 11/12, z.B. die Anodenkammer 11, entlang der aktiven Zellfläche, wo der Umsatz von Oxidans und Brennstoff zu Wasser und Strom stattfindet. Entlang der aktiven Zellfläche wird das Produktwasser regelmäßig abtransportiert. Bislang ist die aktive Zellfläche die einzige Stelle einer Brennstoffzelle, an der Produktwasser entsteht. Nach der Erfindung findet nun auch Umsatz in geringem Maß im konstruktiven Randbereich der Zelle, dort wo die Elektrodenschichten erfindungsgemäß entlang der Membran verlängert wurden, statt. Dahin gelangen die Prozeßgase praktisch nur durch Diffusion durch den Träger der aktiven Katalysatorschicht, also z.B. durch das Kohlepapier, hindurch, weil die Polplatten im konstruktiven Randbereich keine Verteilungskanäle 13 haben.

Die Prozeßgasströme im konstruktiven Randbereich sind, wie ausgeführt, klein oder gar nicht vorhanden und deshalb kann das dort entstehende Produktwasser nicht abtransportiert werden. So sammelt sich Produktwasser 14 in dem entstehenden Spalt, der an das Ende der Elektrodenschicht auf der Membran angrenzt. Es bildet sich damit ein kleines Wasserreservoir 14 zwischen den Dichtungen 5 und 6 und der Membran 2. Dieses Wasserreservoir bietet die folgenden Vorteile:
1.) Die Membranfläche, die außerhalb der aktiven Elektrodenfläche liegt, ist immer von Wasser umgeben. Membranen, deren mechanische Beständigkeit stark vom Wassergehalt abhängen, sind so langzeitstabil einsetzbar.
2.) Eventuell vorhandene Schädigungen im Randbereich der Membran, die z.B. ihren Ursprung im Heißpressen haben, können bislang, d.h. ohne das Wasserreservoir, zu Gasdurchbrüchen führen. Aufgrund des nun vorhandenen Wasserpolsters können nur noch in Wasser gelöste Gase zur Membran hindiffundieren. Diese Gasmenge ist so klein, daß eine örtliche Überhitzung und weitere Schädigung der Membran, wie z.B. ein Gasdurchbruch, auszuschließen ist.
3.) Eine Versprödung und Austrocknung der Membran im Randbereich wird verhindert.

In Figur 2 wird der in Figur 1 umrandete Bereich im Detail gezeigt. In der Mitte angeordnet ist die Membran 2, die am Rand von den Dichtungen 5 und 6 umgeben ist. Sie ist zur Mitte der Zellfläche hin beschichtet mit den Elektroden 3 und 4, die aus den Katalysatorschichten 3a und 4a und den Trägern 3b und 4b bestehen. Zu erkennen ist der axiale Versorgungskanal 10, die Polplatten 7 und 8 mit ihren Verteilungskanälen 13 in den Reaktionsräumen 11 und 12. Am Ende der Elektrodenbeschichtung der Membran bildet sich jeweils ein Wasserreservoir 14, weil das dort entstehende Produktwasser nicht abtransportiert werden kann.

Mit Hilfe der neuen Erweiterung der Elektrodenschicht in den konstruktiven Randbereich der Brennstoffzelle wird erreicht, daß sich dort in einem Spalt ein Wasserreservoir auf einer Stelle der Membran bildet, das die Membran befeuchtet.

## Patentansprüche

1. PEM-Brennstoffzelle, die zumindest zwei Polplatten umfasst, die eine Membran einklemmen, die beidseitig von einer Elektrodenschicht bis auf den äußersten Rand bedeckt ist, wobei die Bedeckung der Membran mit zumindest einer Elektrodenschicht in den konstruktiven Randbereich der Brennstoffzelle hineinragt, im Randbereich Dichtungen zwischen der Membran und dem Rahmenelement des konstruktiven Randbereiches in einer solchen Weise angebracht sind, so das sich Raum für ein Wasserreservoir ergibt.

2. Verfahren zum Betrieb einer PEM-Brennstoffzelle, bei dem die Bildung von Produktwasser im konstruktiven Randbereich der Brennstoffzelle zum Befeuchten der Membran ausgenutzt wird.

3. Brennstoffzellenbatterie aus elektrisch in Serie geschalteten Brennstoffzellen, die einen Stapel aus zumindest zwei mechanisch miteinander verbundenen Brennstoffzellen nach Anspruch 1 umfasst.

## Claims

1. A PEM fuel cell, which comprises at least two pole plates which clamp a membrane, which is covered on both sides to the outermost edge by an electrode layer, wherein coverage of the membrane with at least one electrode layer extends into the structural peripheral zone of the fuel cell, in the peripheral zone seals are provided between the membrane and the frame element of the structural peripheral zone in such a manner that space for a water reservoir is obtained.

2. A method for operating a PEM fuel cell, in which the formation of product water in the structural peripheral zone of the fuel cell is exploited for moistening the membrane.

3. A fuel cell battery of electrically series-connected fuel cells, which battery comprises a stack of at least two mechanically interconnected fuel cells according to claim 1.

## Revendications

1. Cellule de combustion PEM comprenant au moins deux plaques à rôle de pôle, qui serrent une membrane, qui est couverte sur toutes les deux faces avec une couche d'électrodes jusqu'au bord le plus extérieur, où le recouvrement de la membrane, avec au moins une couche d'électrodes, s'étend jusqu'à la zone constructive de bord de la cellule de combustion, dans la zone de bord sont placées des garnitures d'étanchéité entre membrane et l'élément de cadre de la zone constructive de bord, de sorte qu'il résulte un espace pour un réservoir d'eau.

2. Procédé pour le fonctionnement d'une cellule de combustion - PEM, où la formation de l'eau comme produit, dans la zone constructive de bord de la cellule de combustion, est exploitée pour l'humectation de la membrane.

3. Batterie de cellules de combustion, de cellules de combustion connectées en série, qui comprend une pile d'au moins deux cellules de combustion, selon la revendication 1, liées de manière mécanique entre elles.
